# EUROPEAN PATENT SPECIFICATION

(11) **EP 4 048 192 B1**
(45) Date of publication and mention of the grant of the patent: **29.01.2025**
(21) Application number: 20799796.6
(22) Date of filing: 19.10.2020
(51) Int. Cl.: A61C 9/00

(54) **A TUBE AND A METHOD FOR PREPARATION OF A BITE REGISTRATION**
TUBUS UND VERFAHREN ZUR VORBEREITUNG EINER BISSREGISTRIERUNG
TUBE ET PROCÉDÉ DE PRÉPARATION D'UN ENREGISTREMENT OCCLUSAL

(30) Priority: 21.10.2019 GB 201915219
(43) Date of publication of application: 31.08.2022
(73) Proprietor: Chawich, Wassim, Bexleyheath London Greater London DA6 8BT (GB)
(72) Inventor: Chawich, Wassim, Bexleyheath London Greater London DA6 8BT (GB)
(74) Representative: Kemp, Paul Geoffrey
(86) International application number: PCT/GB2020/052628
(87) International publication number: WO 2021/079097

(56) References cited:
- DE-A1- 3 104 721
- DE-A1- 3 329 284
- DE-C2- 3 329 284
- US-A- 1 093 125
- US-A- 3 488 848
- US-A- 4 445 856
- US-A1- 2002 150 860
- US-A1- 2004 005 525
- US-B2- 7 284 982

## Description

### Technical Field

The present invention relates to dentistry for an already partially edentulous patient, in particular to help obtaining an accurate bite registration during the first appointment. Dental models are needed in many types of dental procedures, including; making dentures, crowns, bridges, study models, implant crowns and bridges, etc. Obtaining articulated upper and lower models of a patient's dentition is essential to proceed with the proposed dental treatment, this means that the upper and the lower models should be related to each other in the same way the upper and the lower teeth are related to each other in the mouth. In order to provide this relationship an impression is taken which is known as a bite registration.

### Prior art

The conventional method of modelling is to prepare an impression of each of the upper and lower jaw dentition. To achieve this an impression material is loaded into an impression tray. A loaded impression tray is then pressed against one of the upper teeth or lower teeth. The impression material sets to a resilient state over a period of around one to three minutes. The tray is then removed carrying the impressed material with it and forming a dentition impression. The process is repeated for the other of the upper or lower teeth.

The contact of the occlusal surfaces of the teeth (articulation or registration) of the upper and lower jaws also needs to be captured as a bite registration. To achieve this on the same visit a bite registration is taken using one of the dental impression materials available on the market. The impression material is extruded over the occlusal surfaces of the lower jaw teeth and the patient encouraged to bite normally onto the impression material. The impression material sets, capturing the bite registration. The set material is removed from the patient's teeth and is known as the "bite registration". The resulting bite registration and dental impressions are passed to a dental technician who uses the bite registration and dental impressions to fabricate models of the patient's upper and lower dentition. The technician will use the bite registration to articulate the upper and the lower models together.

Where the patient is missing two or more adjacent rearmost teeth in any side and in either or both the upper or lower jaw, accurate bite registration is not conventionally possible because of a lack of posterior stability. Conventionally this requires an inconvenient additional wax block procedure at a second dental session.

Where the patient is missing two or more rearmost teeth the dental technician will fabricate a device called a wax block which will then be sent to the dentist. The patient is called to a second appointment to register his/her bite with the aid of the wax block. The bite registration on the wax block is returned to the dental technician to articulate the patient's dentition model.

A third (procedure) dental visit is then required by the patient to implement the desired procedure based on the articulated dental model.

It is desirable to reduce the number of treatment sessions in order to reduce patient inconvenience and dental costs.

A method of achieving the impression stage is known involving optically 3D modelling the teeth and jaw structure and contours from the patient in situ. A 3D model of the patient's maxilla and mandible can then be fabricated, usually 3D printed. While virtual 3D models can be related to each other on the computer, this still is not possible on the printed models without going through the 'wax block' step. The equipment for virtual 3D imaging and virtual modelling is currently very expensive and does not fully eliminate the extra session of the wax block if a printed and articulated model is required.

The reader may be further enlightened as to the state of the art by reference to the published patent applications: US 2002/150860 A1, DE 33 29 284 A1, US 1 093 125 A and US 4 445 856 A. US 2002/150860 A1 discloses an inflatable dental tray for creating a dental impression. The tray is inflated for retention of an impression material which solidifies after a dental structure has been impressed therein. The inflatable tray can be configured for various inflation methods and in various shapes to form full or partial impressions. In one aspect of the invention the tray is inflated with impression material that flows from apertures forming a buildup. Various additional inventive aspects include an exterior filled inflated tray, along with tubes which provide for proper mixing of impression material. US2004005525 A1 discloses matter generally similar to US200215860 A1 but with the addition of the description of paragraph 0094 and 0095 which propose an impression tray formed of mesh.

The present invention seeks to provide an inexpensive and reliable alternative solution to the aforesaid technical problem.

### Summary of Invention

According to a first aspect of the present invention there is provided a method of forming a bite registration of a patient's dentition according to claim 1.

According to a second aspect of the present invention there is provided a tube of mesh according to claim 4 for use in a method of preparing a bite registration according to the first aspect of the present invention.

The mesh tube may be formed of strands woven together to provide flexibility and resilience to suit this purpose. The tube has a mesh size sufficiently small to provide posterior stabilising resistance to the impression material when receiving the bite. At the same time the surgical mesh is sufficiently deformable to conform to the patient's bite. This enables an accurate bite impression to be made against the unset impression material. Once the impression material sets the mesh is embedded into the set impression material.

Preferably the tube is fabricated from a surgical mesh. Surgical mesh materials are well known for internal surgical applications and consist of a nominally planar web or screen like material usually formed from a network or weave of wires or threads which a surgeon may manipulate to provide support for a surgical repair. The material composition, size (gauge) of the wires and number of wires per square centimetre will be factors in determining the size of the spaces between the wires and the flexibility and or resilience of the mesh. Appropriate selection of the aforementioned mesh parameters will provide a mesh from which a tube can be fabricated which provides the required posterior stability to the impression material, while retaining the ability to conform to the shape of the patient's jaw and teeth. Conventionally biocompatible materials such as non-absorbable synthetic polymers polypropylene), absorbable synthetic polymers (polyglycolic acid or polycaprolactone), Biologic (acellular collagen), or composites (a combination of any of the three previous materials) may be used to form a surgical mesh for implant surgery, in the present case, where the tube is only temporarily in contact with the patient other materials may be suitable, for example stainless steel wire mesh.

The surgical mesh may be flexible, or may have sufficient resilience at least around the open end of the tube to hold the tube open. One or more resilient bands may extend wholly or partially around the open end of the tube to hold the end open in order to facilitate the introduction of impression material. The tube may be injected with impression material from a conventional automatic mixing gun. An automatic mixing gun consist of two storage chambers containing components to form and harden a registration material. In use the material is simultaneously discharged from each chamber by the actuation of a single plunger to be mixed before expulsion from a nozzle. The opening of the tube may be tailored to match the common size of a gun nozzle.

Once the tube is packed with impression material it is plastic and forms a package which is moved to be located at the edentulous region. The tube may be manipulated by the dentist to hold it in place, for example by moulding to the shape of the edentulous jaw. When the step of locating is completed the nozzle of the gun is applied to the upper surface of the package and a continuous layer of impression material is discharged from the gun nozzle over the occlusal surfaces of the remaining teeth. The patient is encouraged to bite normally into the impression material and package and to hold the bite until the impression material sets. When the impression material sets the tube, contained impression material and material covering the occlusal surfaces forms a single integral bite registration. The mesh may be thought of as porous because the spaces between the wires from which it is woven will allow some of the unset impression material to flow into the spaces.

Models are formed from conventional tray impressions of the patient's upper and lower teeth. The bite registration is then used in conjunction with the conventional impressions of the upper and lower jaw dentition to relate (articulate) the models of the upper and lower teeth accurately. This eliminates the need for a "second" wax block visit procedure.

Where edentulous regions of both upper and lower jaw are in opposition, two packages may be deployed or a single double sized package in order to register the dentition and jaw shape and configuration from the both jaws and adjacent remaining teeth.

The tube may be cylindrical or cuboid. The tube preferably has an asymmetric cross section so that the height is different to the width. Preferably the length is greater than the height which is greater than the width. Preferred nominal dimensions are 12 mm long by 7 mm high by 5 mm wide. However, tubes may be provided in a range of sizes.

The mesh tube may be provided in each of a range of lengths and diameters so that the practitioner can select the size of tube appropriate to the patients edentulous space.

### Brief Description of the Figures

A tube of surgical mesh and a method of taking the jaw registration of a patient's dentition where the patient is partially edentulous using a tube of surgical mesh, will now be described, by way of example only, with reference to the accompanying figures in which:
Figure 1 is a right side elevation of a patient's jaw;
Figure 2 is a right side elevation impression of a patient's lower jaw taking an impression using a conventional impression tray;

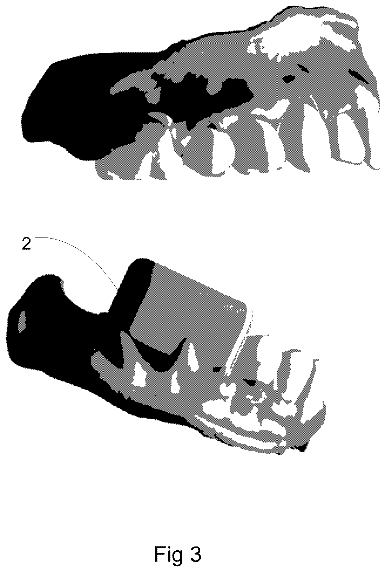

Figure 3 is a right side elevation illustrating a first step in the use of the surgical mesh tube;
Figure 4 is a right side elevation illustrating a second step in the use of the surgical mesh tube;
Figure 5 is a right side elevation illustrating a third step in the use of the surgical mesh tube;

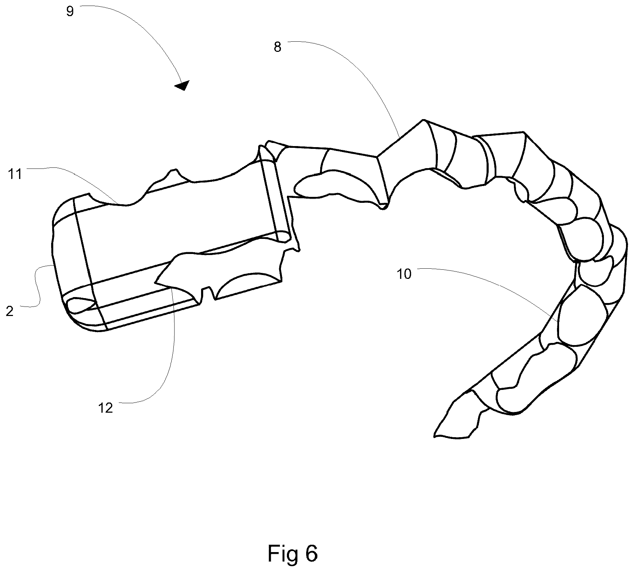

Figure 6 is an isometric view of the underside of a bite registration formed by the process;

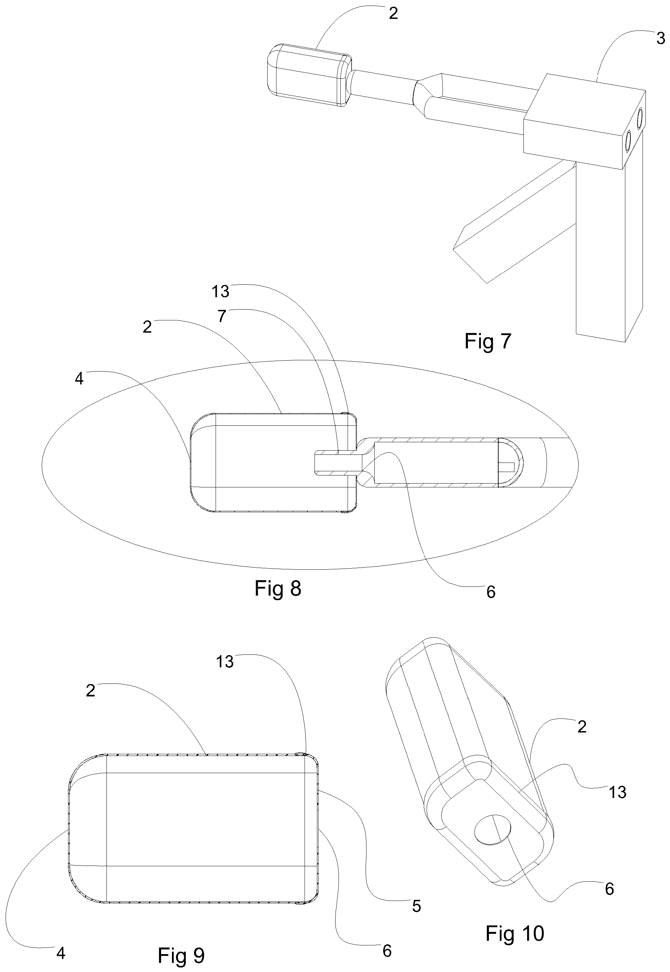

Figure 7 is an isometric view of an impression material gun in use to inject impression material into a tube;
Figure 8 is an enlarged sectional view of the empty tube and gun;
Figure 9 is a further enlarged sectional view of the tube; and
Figure 10 is an enlarged isometric view showing a filling wall of the tube.

### Detailed Description

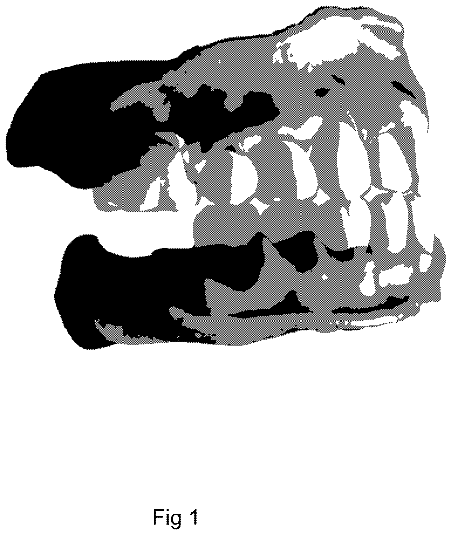

Figure 1 shows a model of a patient's jaw and dentition where the first and the second molar teeth, are missing from the right side of the lower jaw forming a vacancy. A model is used for illustration purposes because in a real patient much would be obscured by the surrounding facial tissue.

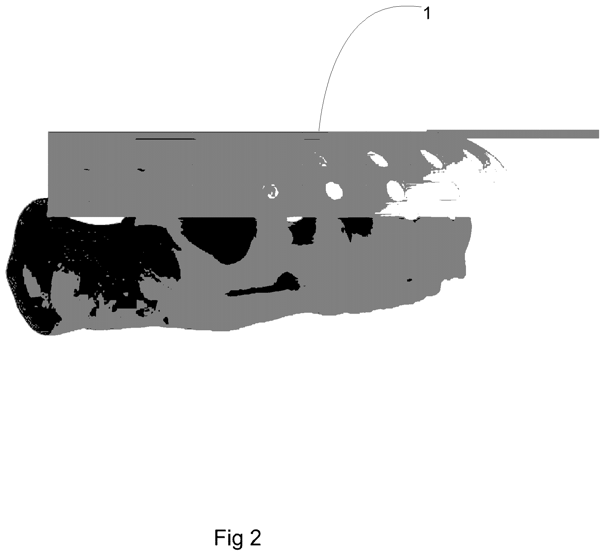

In the process of the invention the dentist takes a substantially conventional impression of the lower teeth and upper teeth. As illustrated in figure 2 a conventional impression tray 1 is filled with a conventional impression material and pressed down onto the patient's lower dentition. This is then left in place until the material sets and is removed. An impression of the upper jaw dentition is also taken using a new tray and similar conventional technique.

In order to securely take a bite registration utilising the edentulous area of the lower left first and second molars a tube 2 formed of surgical mesh is first filled with an impression material dispensed from a conventional gun 3 to form a package.

The tube of the embodiment is configured to have a length (L) of 12mm height (H) of 5 mm and width (W) of 7mm and is nominally cuboid, although the flexibility and porosity of the mesh and plasticity of the impression material prior to setting means that the package formed by the mesh tube and impression material can be significantly deformed. One end wall 4 is closed off by the surgical mesh. An opposite filling end wall 5 is partially closed off but incorporates a filling hole 6. Filling hole 6 is tailored to closely accommodate a nozzle 7 fitted to the gun 3. To facilitate handling and filling a resilient band 8 extends around the edge of the filling end wall 5.

With the impression material still unset the subject is encouraged to open their mouth and the package formed by the tube and impression material is located in the vacancy and secured in place. The plasticity of the package facilitates manipulation to allow the tube to be secured and manipulated to receive a faithful impression of the patient's jaw and teeth remaining adjacent the vacancy.

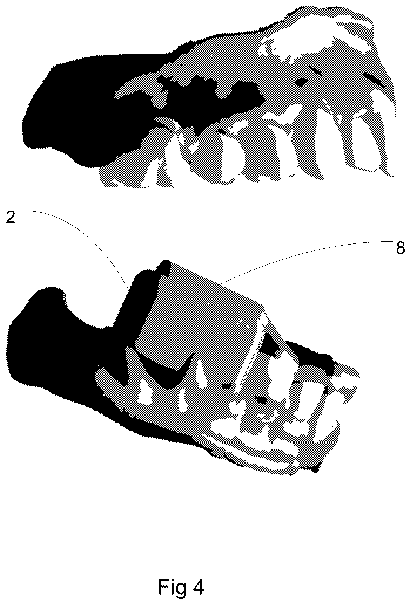

The surgical mesh is flexible and will contain the impression material while deforming to conform to the shape of teeth and jaw pressed into it. The tube 2 is closed at one end and deployed in the vacancy so that the open end faces out of the patient's mouth. With the tube 2 secured in place the practitioner uses the impression material dispensing gun 3 to eject impression material onto the package. Further impression material 8 is then extruded from the gun to overlie the occlusal surfaces of the remaining teeth as shown in figure 4. Containment should be understood to be partial as some unset impression material may weep through the mesh.

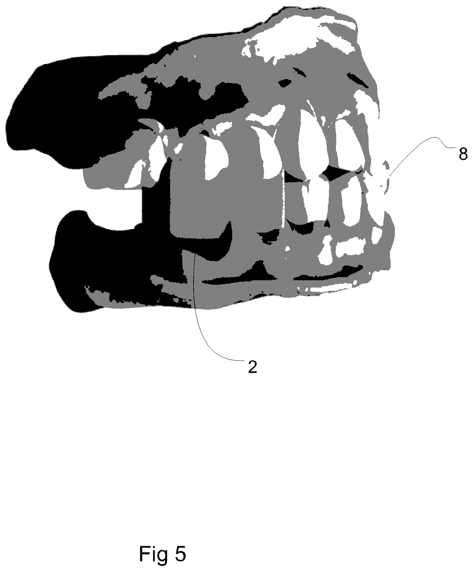

The patient is then encouraged to bite normally onto the package and the further extrusion material overlying the teeth as shown in figure 5. This action plastically deforms the package 2 and extrusion material to 8 reflect the position and shape of the subject's remaining teeth from each of the upper and lower jaw. The bite is held for a period sufficient to allow the impression material to set in each of the package and the further extrusion material. This setting process step will also bond the package and further material together.

Once set the subject is encouraged to open their mouth and the resulting bite registration 9 is removed by the dentist. The bite registration 9 now contains indentations 10 forming a record of how the subject's remaining lower teeth and indentations 11 formed by the subject's upper teeth relate to each other in a normal bite. Indentations 12 can also record the shape of the subject's edentulous gum.

The tray impressions of the patient's upper and lower dentition are used to fabricate models of each of the patient's upper jaw dentition and lower jaw dentition.

The bite registration 9 can then be used in conjunction with the models constructed from the conventional dental tray impressions to accurately relate the upper and the lower models together. The practitioner and patient can then directly move on to the proposed dental procedure at a second visit. The conventional requirement for a wax block procedure (made in the dental lab) at a second visit is obviated and the required number of patient visits to produce an articulated model of the patient's dentition is reduced from two to one.

In a variant of the tube the filling end wall may be shaped to be concave in order to better engage the gun nozzle. The concavity of the filling end wall may be conical.

## Claims

1. A method of forming a bite registration of a patient's dentition where the patient is partially edentulous, comprising the steps of:
packing a tube (2) of mesh according to any one of claims 4-9 by filling it with an impression material to form a package; locating the package in the edentulous region of a patient's jaw;
dispensing a line (8) of impression material across the top of the package and the occlusal surfaces of
the subject's remaining teeth;
causing the subject to bite for a period sufficient to allow the impression material to set;
removing the resulting bite registration (9).

2. A method according to claim 1 comprising packing the tube (2) before locating the tube in the edentulous region.

3. A method according to one of claims 1 or 2 comprising the step of forming tray impressions of the patient's upper and lower jaw dentition during the same dental session;
fabricating models of the subject's upper and lower jaw dentition from the tray impressions;
using the bite registration to articulate the subject's dentition models without the need for a wax block step.

4. A tube (2) for use in a method of forming a bite registration (9) according to claim 1, said tube closed at one end and open at the opposite end, whereby the tube (2) can be packed with an impression material, forming a package and, in use can be located in a vacancy formed by an edentulous region of a patient's lower or upper jaw to take the bite registration of the edentulous region of the jaw and the respective opposing jaw or teeth, to facilitate the formation of a bite registration without a wax block procedure, **characterized in that** the tube (2) is a tube of mesh.

5. A tube (2) according to claim 4 wherein the mesh, when packed with impression material, is sufficiently flexible to conform to the surface of teeth.

6. A tube (2) according to claim 4 or claim 5 wherein the mesh is sufficiently porous to bond with a dental bite impression material and form a resilient record of the subject's bite when the impression material sets.

7. A tube (2) according to any one of claims 4 to 6 having at least a side wall and two opposing end walls (4,5), wherein a first end wall (4) closes off the package to substantially resist the passage of unset impression material and a filling end wall (5) includes a hole (6) to receive the nozzle (7) of a filling gun (3) whereby the tube (2) can be filled with impression material.

8. A tube (2) according to claim 7 wherein the hole (6) is tailored to closely fit a standard sized nozzle of an impression material gun (3).

9. A tube (2) according to claim 7 including a resilient band (13) extending around the filling end wall (5), wherein the resilient band (13) encourages the filling end wall to an expanded condition to facilitate handling the tube (2).

## Patentansprüche

1. Verfahren zum Bilden einer Bissregistrierung des Gebisses eines Patienten, wobei der Patient teilweise zahnlos ist, umfassend die folgenden Schritte:
Packen eines Schlauchs (2) aus Gewebe nach einem der Ansprüche 4-9 durch Füllen desselben mit einem Abdruckmaterial, um ein Paket zu bilden;
Positionieren des Pakets in dem zahnlosen Bereich des Kiefers eines Patienten; Ausgeben einer Linie (8) von Abdruckmaterial über die Oberseite des Pakets und die Okklusionsflächen der verbleibenden Zähne der zu behandelnden Person; Veranlassen der zu behandelnden Person, für einen Zeitraum zuzubeißen, der ausreicht, um das Abdruckmaterial abbinden zu lassen; Entnehmen der resultierenden Bissregistrierung (9).

2. Verfahren nach Anspruch 1, umfassend das Packen des Schlauchs (2) vor dem Positionieren des Schlauchs in dem zahnlosen Bereich.

3. Verfahren nach einem der Ansprüche 1 oder 2, umfassend den Schritt des Bildens von Löffelabdrücken des Gebisses des Ober- und des Unterkiefers des Patienten während derselben zahnmedizinischen Behandlungssitzung; Anfertigen von Modellen des Gebisses des Ober- und des Unterkiefers der zu behandelnden Person aus den Löffelabdrücken; Verwenden der Bissregistrierung, um die Gebissmodelle der zu behandelnden Person gelenkig zu verbinden, ohne dass ein Wachsblockschritt benötigt wird.

4. Schlauch (2) zur Verwendung in einem Verfahren zum Bilden einer Bissregistrierung (9) nach Anspruch 1, wobei der Schlauch an einem Ende geschlossen und an dem gegenüberliegenden Ende offen ist, wodurch der Schlauch (2) mit einem Abdruckmaterial gepackt werden kann, sodass ein Paket gebildet wird, und im Gebrauch in einer durch einen zahnlosen Bereich des Unter- oder des Oberkiefers eines Patienten gebildeten Lücke positioniert werden kann, um die Bissregistrierung des zahnlosen Bereichs des Kiefers und des gegenüberliegenden Kiefers bzw. der gegenüberliegenden Zähne zu nehmen, um die Bildung einer Bissregistrierung ohne einen Wachsblock zu erleichtern, **dadurch gekennzeichnet, dass** es sich bei dem Schlauch um einen Schlauch aus Gewebe handelt.

5. Schlauch (2) nach Anspruch 4, wobei das Gewebe, wenn es mit Abdruckmaterial gepackt ist, ausreichend flexibel ist, um sich an die Oberfläche von Zähnen anzupassen.

6. Schlauch (2) nach Anspruch 4 oder Anspruch 5, wobei das Gewebe ausreichend porös ist, um sich mit einem zahnmedizinischen Bissabdruckmaterial zu verbinden und eine elastische Aufzeichnung des Bisses der zu behandelnden Person zu bilden, wenn das Abdruckmaterial abbindet.

7. Schlauch (2) nach einem der Ansprüche 4 bis 6, der mindestens eine Seitenwand und zwei gegenüberliegende Endwände (4, 5) aufweist, wobei eine erste Endwand (4) das Paket abschließt, um dem Hindurchgelangen von nicht abgebundenem Abdruckmaterial im Wesentlichen zu widerstehen, und eine Einfüllendwand (5) ein Loch (6) zum Aufnahmen der Düse (7) einer Einfüllpistole (3) beinhaltet, wodurch der Schlauch (2) mit Abdruckmaterial gefüllt werden kann.

8. Schlauch (2) nach Anspruch 7, wobei das Loch (6) maßgeschneidert ist, um eng um eine Düse in Standardgröße einer Abdruckmaterialpistole (3) zu passen.

9. Schlauch (2) nach Anspruch 7, beinhaltend ein elastisches Band (13), das sich um die Einfüllendwand (5) erstreckt, wobei das elastische Band (13) die Einfüllendwand in einen aufgeweiteten Zustand drängt, um die Handhabung des Schlauchs (2) zu erleichtern.

## Revendications

1. Procédé de formation d'un enregistrement d'occlusion de la denture d'un patient où le patient est partiellement édenté, comprenant les étapes consistant à :
remplir un tube (2) de maillage selon l'une quelconque des revendications 4-9 en le remplissant d'un matériau d'empreinte pour former un ensemble ;
placer l'ensemble dans la région édentée de la mâchoire d'un patient ;
distribuer une ligne (8) de matériau d'empreinte sur la partie supérieure des surfaces occlusales des dents restantes du sujet ;
amener le sujet à mordre pendant une durée suffisante pour permettre au matériau d'empreinte de prendre ;
retirer l'enregistrement d'occlusion en résultant (9).

2. Procédé selon la revendication 1, comprenant le remplissage du tube (2) avant de placer le tube dans la région édentée.

3. Procédé selon l'une des revendications 1 ou 2, comprenant l'étape consistant à former des empreintes de porte-empreinte de la denture des mâchoires supérieure et inférieure du patient pendant la même séance dentaire ;
fabriquer des modèles de la denture des mâchoires supérieure et inférieure du sujet à partir des empreintes de porte-empreinte ;
utiliser l'enregistrement d'occlusion pour articuler les modèles de denture du sujet sans nécessiter d'étape de bloc de cire.

4. Tube (2) destiné à être utilisé dans un procédé de formation d'un enregistrement d'occlusion (9) selon la revendication 1, ledit tube étant fermé à une extrémité et ouvert à l'extrémité opposée, par lequel le tube (2) peut être rempli avec un matériau d'empreinte, formant un ensemble et, lors de l'utilisation, peut être placé dans une lacune formée par une région édentée de la mâchoire supérieure ou inférieure d'un patient pour prendre l'enregistrement d'occlusion de la région édentée de la mâchoire et de la mâchoire opposée respective ou des dents, pour faciliter la formation d'un enregistrement d'occlusion sans procédure de bloc de cire, **caractérisé en ce que** le tube (2) est un tube de maillage.

5. Tube (2) selon la revendication 4, dans lequel le maillage, lorsqu'il est rempli de matériau d'empreinte, est suffisamment flexible pour se conformer à la surface de dents.

6. Tube (2) selon la revendication 4 ou la revendication 5, dans lequel le maillage est suffisamment poreux pour se lier avec un matériau d'empreinte d'occlusion dentaire et former un enregistrement élastique de d'occlusion dentaire du sujet lorsque le matériau d'empreinte prend.

7. Tube (2) selon l'une quelconque des revendications 4 à 6, ayant au moins une paroi latérale et deux parois d'extrémité opposées (4,5), dans lequel une première paroi d'extrémité (4) obture l'ensemble pour résister sensiblement au passage d'un matériau d'empreinte durci et une paroi d'extrémité de remplissage (5) inclut un trou (6) pour recevoir la buse (7) d'un pistolet de remplissage (3) par laquelle le tube (2) peut être rempli de matériau d'empreinte.

8. Tube (2) selon la revendication 7, dans lequel le trou (6) est conçu pour correspondre étroitement à une buse de taille standard d'un pistolet de matériau d'empreinte (3).

9. Tube (2) selon la revendication 7, incluant une bande élastique (13) s'étendant autour de la paroi d'extrémité de remplissage (5), dans lequel la bande élastique (13) incite la paroi d'extrémité de remplissage vers un état dilaté pour faciliter la manipulation du tube (2).
